# EUROPÄISCHE PATENTSCHRIFT

(11) **EP 2 327 135 B1**
(45) Veröffentlichungstag und Bekanntmachung des Hinweises auf die Patenterteilung: **06.06.2012**
(21) Anmeldenummer: 08874952.8
(22) Anmeldetag: 18.09.2008
(51) Int. Cl.: H02J 13/00

(54) **FUNKTIONSMODUL UND KOPPELMODUL FÜR EINE SCHALTGERÄTESTEUERUNG UDNSYSTEM ZUR SCHALTGERÄTESTEUERUNG**
FUNCTIONAL MODULE AND COUPLING MODULE FOR A SWITCH DEVICE CONTROL AND SYSTEM FOR SWITCH DEVICE CONTROL
MODULE FONCTIONNEL ET MODULE DE COUPLAGE D'UNE COMMANDE D'APPAREIL DE COMMUTATION, ET SYSTÈME DE COMMANDE D'APPAREIL DE COMMUTATION

(43) Veröffentlichungstag der Anmeldung: 01.06.2011
(73) Patentinhaber: Siemens Aktiengesellschaft, 80333 München (DE)
(72) Erfinder: HARMSEN, Peter, 92521 Schwarzenfeld (DE); KEIL, Rainer, 90451 Nürnberg (DE); KRAUS, Helmut, 92245 Kümmersbruck (DE)
(86) Internationale Anmeldenummer: PCT/EP2008/007831
(87) Internationale Veröffentlichungsnummer: WO 2010/031414

(56) Entgegenhaltungen:
- WO-A-2006/065917
- DE-A1- 4 401 093
- FR-A- 2 803 416

## Beschreibung

Die Erfindung betrifft ein Funktionsmodul sowie ein Koppelmodul für eine Schaltgerätesteuerung. Ferner betrifft die Erfindung ein System zur Schaltgerätesteuerung.

In elektrischen Anlagen mit schaltbaren Verbraucherabzweigen besteht häufig der Bedarf, die Schaltorgane, wie Schütze, abhängig von einander zu schalten. Diese manchmal komplexen Schaltungen erfordern häufig Verknüpfungen, das Abfragen der Schaltzustände, die Ansteuerung der Schaltgeräte und Verriegelungen und sind somit oft mit sehr viel Verdrahtungsaufwand im Steuerstromkreis verbunden. Zusätzlich werden Zusatzgeräte, wie Zeitrelais oder Hilfsschalter, benötigt, die häufig mit jedem einzelnen Schaltgerät verdrahtet werden müssen.

WO2006065917 offenbart eine Steuerungsschaltung für eine elektrische Anlage mit Schaltbaren Verbrarchern. DE4401093 offenbart eine Schaltvorrichtung zur Steuerung der stromversorgung eines Verbrauchers, in einer Anlage mit schaltbaren Verbraucherabzweigen.

Der Aufbau von komplexen Schaltungen erfolgt daher durch eine Verdrahtung der Steuerstromkreise, in der die Schaltgeräte auch mit den zusätzlichen Komponenten, wie Zeitrelais und Hilfsschalter, verdrahtet werden, was die Gesamtkosten der Installation in die Höhe treiben kann und den Aufbau der komplexen Schaltungen verkompliziert. Je nach Installateur werden die Schaltgeräte, insbesondere Schütze, unterschiedlich verdrahtet. Durch den Austausch von Schaltgeräten, insbesondere unterschiedlicher Hersteller, ist die Verdrahtung häufig für Dritte nicht mehr nachvollziehbar, so dass ein erhöhter Aufwand besteht, um hier einen Durchblick der Verdrahtung der einzelnen Schaltgeräte und der Zusatzgeräte zu erlangen.

Aufgabe der Erfindung ist es, den Verdrahtungsaufwand für komplexe Schaltungen zu reduzieren, die Steuerung der jeweiligen eingesetzten Schaltgeräte zu zentralisieren und die an die Schaltgeräte angeschlossenen Zusatzgeräte in Ihrer Ausgestaltung zu vereinfachen und zu normen.

Diese Aufgaben werden erfindungsgemäß durch ein Funktionsmodul mit den Merkmalen gemäß dem unabhängigen Patentanspruch 1, durch ein Koppelmodul mit den Merkmalen gemäß dem unabhängigen Patentanspruch 10 sowie durch ein System zur Schaltgerätesteuerung mit den Merkmalen gemäß dem unabhängigen Patentanspruch 13 gelöst. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Funktionsmodul beschrieben sind, selbstverständlich auch im Zusammenhang mit dem erfindungsgemäßen Koppelmodul sowie dem erfindungsgemäßen System zur Schaltgerätesteuerung, und jeweils umgekehrt, so dass bezüglich der Offenbarung zu den einzelnen Erfindungsaspekten stets wechselseitig Bezug genommen wird.

Die abhängigen Patentansprüche beschreiben vorteilhafte Aspekte der Erfindung.

Gemäß dem ersten Aspekt der Erfindung werden die Aufgaben durch ein Funktionsmodul für eine Schaltgerätesteuerung, wobei das Funktionsmodul eine Kommunikationseinheit mit einer Kommunikationsschnittstelle zur Kommunikation mit mindestens einem weiteren Funktionsmodul und/oder mindestens einem Koppelmodul, eine mit der Kommunikationseinheit verbundene Steuereinheit , die ausgebildet ist, von dem mindestens einem weiteren Funktionsmodul und/oder dem mindestens einem Koppelmodul zu der Kommunikationseinheit übertragene Signale zu empfangen und Schaltkommandos über die Kommunikationseinheit zu dem mindestens einem weiteren Funktionsmodul und/oder dem mindestens einem Koppelmodul zu übertragen, eine erste Steuerstromschnittstelle zur elektrischen Verbindung zu einem ersten Schaltgerät oder einer externen Energieversorgungseinheit, und eine zweite Steuerstromschnittstelle zur Steuerstromversorgung des mindestens einen weiteren Funktionsmoduls und/oder des mindestens einen Koppelmoduls aufweist, gelöst. Ein derartiges Funktionsmodul für eine Schaltgerätesteuerung reduziert den Verdrahtungsaufwand für komplexe Schaltungen, wie beispielsweise eine Stern-Dreieck-Schaltung. Ferner zentralisiert es die Steuerung der jeweiligen eingesetzten Schaltgeräte der komplexen Schaltungen und ermöglicht eine Vereinfachung bzw. Normung der an die Schaltgeräte angeschlossenen Zusatzgeräte, den sogenannten Koppelmodulen. Dadurch, dass das Funktionsmodul eine Kommunikationsschnittstelle zur Kommunikation mit mindestens einem weiteren Funktionsmodul und/oder mindestens einem Koppelmodul, eine erste Steuerstromschnittstelle zur elektrischen Verbindung zu einem ersten Schaltgerät oder einer externen Energieversorgungseinheit sowie eine zweite Steuerstromschnittstelle zur Steuerstromversorgung mindestens eines weiteren Funktionsmoduls und/oder mindestens eines Koppelmoduls aufweist, kann die Steuerstromversorgung und damit das Auslesen des Schaltzustandes sowie die Steuerung des ersten Schaltgerätes und/oder der weiteren an den weiteren Funktionsmodulen und/oder Koppelmodulen angeschlossenen Schaltgeräte vereinfacht werden. Das Funktionsmodul beinhaltet sämtliche Elemente, die zum Ansteuern des ersten Schaltgerätes und der weiteren Funktionsmodule bzw. der Koppelmodule und damit der weiteren Schaltgeräte erforderlich sind. Durch diese Vielseitigkeit des Funktionsmoduls können die weiteren Koppelmodule deutlich vereinfacht ausgebildet werden und der Verdrahtungsaufwand zwischen dem Funktionsmodul, den Koppelmodulen und den Schaltgeräten nimmt ab.

Das Funktionsmodul kann durch einen derartigen Aufbau beispielsweise den Ablauf einer Stern-Dreieck-Schaltung, aufweisend drei Schütze als Schaltgeräte, steuern. In diesem Fall sitzt das Funktionsmodul an dem ersten Schütz, dem sogenannten Netzschütz. Das Funktionsmodul bezieht den Steuerstrom über die erste Steuerstromschnittstelle von dem Netzschütz oder einer externen Energieversorgungseinheit. Über die zweite Steuerstromschnittstelle versorgt das Funktionsmodul die Koppelmodule, die an den weiteren Schützen, d.h. dem Sternschütz und dem Dreieckschütz, angeordnet sind, mit Steuerstrom. Die gesamte Steuerstromversorgung der elektrischen Schaltung, hier der Stern-Dreieck-Schaltung, erfolgt über das Funktionsmodul. Dies wird ermöglicht durch die zweite Steuerstromschnittstelle des Funktionsmoduls. Eine aufwendige Steuerstromverdrahtung der weiteren Koppelmodule von dem Netzschütz oder der externen Energieversorgungseinheit ist nicht erforderlich. Hierbei versorgt das Funktionsmodul über ein erstes Koppelmodul ein weiteres Koppelmodul mit dem Steuerstrom. Die komplexe Schaltung kann auch ein Starter für einen Motor mit mehreren Drehzahlen, eine Dahlander-Schaltung, eine Wendeschaltung, etc. sein.

Über die Kommunikationsschnittstelle empfängt die Kommunikationseinheit Signale (AE) von dem wenigstens einen weiteren Funktionsmodul und/oder dem wenigstens einen weiteren Koppelmodul. Es ist denkbar, dass weitere Funktionsmodule zum Betrieb einer komplexen Schaltung eingesetzt werden. Vorteilhafterweise ist aber nur ein Funktionsmodul erforderlich. In der Regel können im Weiteren einfach ausgebildete Koppelmodule eingesetzt werden, um die Verbindung zu den weiteren Schaltgeräten herzustellen. Ferner überträgt das Funktionsmodul Schaltkommandos (SK) an das wenigstens eine weitere Funktionsmodul und/oder das wenigstens eine weitere Koppelmodul zur Steuerung dieser bzw. der an diese angeschlossenen Schaltgeräte, beispielsweise des Stern- und des Dreieckschützes einer Stern-Dreieck-Schaltung.

Durch die Kommunikationsschnittstelle und die Kommunikationseinheit sowie die zweite Steuerstromschnittstelle ist das Funktionsmodul in der Lage den Ablauf einer komplexen Schaltung, wie einer Stern-Dreieck-Schaltung, einer Dahlander-Schaltung, einer Wendeschaltung, etc. zu steuern. Hierbei kann das Funktionsmodul beispielweise die Verriegelung, die Hochlaufzeit und die Umschaltphase aller an das Funktionsmodul bzw. an die weiteren Funktionsmodule bzw. die Koppelmodule angeschlossenen Schaltgeräte steuern. Die Verdrahtung eines Hilfsschalters oder eines Zeitschaltrelais zu jedem einzelnen Schaltgerät einer komplexen Schaltung entfällt durch den Einsatz eines derartigen Funktionsmoduls.

Bevorzugt ist ein Funktionsmodul, bei dem die zweite Steuerstromschnittstelle in der Kommunikationsschnittstelle der Kommunikationseinheit oder die Kommunikationsschnittstelle der Kommunikationseinheit in der zweiten Steuerstromschnittstelle integriert ist. Dies bedeutet, dass eine einzige Schnittstelle für die Kommunikation und die Steuerstromversorgung zuständig ist. Die eine Schnittstelle kann zwei getrennte Kontaktstellen aufweisen. Ferner kann die Kommunikation zwischen dem Funktionsmodul und einem weiteren Funktionsmodul und/oder einem Koppelmodul über den Steuerstromkreislauf erfolgen. D.h., Signale können über den Steuerstromkreis von dem Funktionsmodul empfangen und Schaltkommandos an die weiteren Module übertragen werden. Eine derartig ausgebildete Schnittstelle kann die Steuerstromversorgung zu einem anderen Modul und gleichzeitig die Kommunikation zu einem anderen Modul ermöglichen. D.h., über den Steuerstrom kann gleichzeitig auch der Datenaustausch zwischen den Modulen erfolgen.

Eine bevorzugte Ausführungsform des Funktionsmodul sieht vor, dass das Funktionsmodul elektrisch und/oder mechanisch mit dem ersten Schaltgerät verbunden ist, um über ein der Steuereinheit zugeordnetes Sensorelement den Schaltzustand des ersten Schaltgerätes zu erfassen und zur Übertragung von Schaltkommandos an das erste Schaltgerät. Eine derartige Ausgestaltung des Funktionsmoduls ist dann erforderlich, wenn die Steuerstromversorgung des Funktionsmoduls nicht von dem ersten Schaltgerät, sondern von einer externen Energieversorgungseinheit erfolgt. Erfolgt die Steuerstromversorgung des Funktionsmoduls über das erste Schaltgerät, beispielsweise das Netzschütz einer Stern-Dreieck-Schaltung, kann der Schaltzustand des ersten Schaltgerätes über den weitergeleiteten Steuerstrom direkt von dem Netzschütz zu dem Funktionsmodul übertragen werden. Wird das Funktionsmodul von einer externen Energieversorgungseinheit mit Steuerstrom versorgt, muss über ein der Steuereinheit zugeordnetes Sensorelement der Schaltzustand des ersten Schaltgerätes erfasst werden. Durch die elektrische und/oder mechanische Kopplung des Funktionsmodules mit dem ersten Schaltgerät kann das Steuergerät eine Bewegung eines Stößels des ersten Schaltgerätes erfassen und die erfassten Informationen an die Steuereinheit des Funktionsmoduls weitergeben. Das Sensorelement ist bevorzugt in dem Funktionsmodul integriert. Dabei erfasst das Sensorelement beispielsweise die Position bzw. eine Bewegung eines in das Funktionsmodul hineinragenden Stößels eines Betätigungselementes des ersten Schaltgerätes. Zur Erfassung der Bewegung des Stößels sind auch induktive, kapazitive oder optische Sensorelemente einsetzbar.

Ferner ist ein Funktionsmodul bevorzugt, bei dem die Steuereinheit des Funktionsmoduls ausgebildet ist, anhand der von dem Sensorelement erfassten Messgrößen den Schaltzustand des ersten Schaltgerätes und/oder den Schaltzustand des mindestens einen zweiten Schaltgerätes, welches mit dem mindestens einem weiteren Funktionsmodul und/oder dem mindestens einem Koppelmodul elektrisch verbunden ist, anhand der empfangenen Signale (AE) zu ermitteln, wobei das mindestens eine weitere Funktionsmodul und/oder das mindestens eine Koppelmodul ein Sensorelement zur Erfassung des Schaltzustandes des mindestens einen zweiten Schaltgerätes aufweist. Dabei weist bevorzugt jedes weitere Funktionsmodul bzw. jedes Koppelmodul ein Sensorelement auf, um den Schaltzustand der an das jeweilige weitere Funktionsmodul bzw. an das mindestens eine Koppelmodul mechanisch und/oder elektrisch verbundenen Schaltgeräte zu erfassen. Bevorzugt ragt in jedes weitere Funktionsmodul bzw. in jedes Koppelmodul ein Stößel eines Betätigungselementes des jeweils angeschlossenen Schaltgerätes, beispielsweise eines Sternschützes und eines Dreieckschützes einer Stern-Dreieck-Schaltung, hinein. Die jeweiligen Sensorelemente der Funktionsmodule und der Koppelmodule erfassen den Schaltzustand der jeweiligen Schaltgeräte und übertragen diese an die Kommunikationseinheit des Funktionsmoduls. Das Funktionsmodul kann aufgrund der Informationen der Schaltzustände der einzelnen Schaltgeräte den Schaltzustand der gesamten Schaltung überwachen und den Ablauf der Schaltung der Schaltgeräte zentral steuern. Stellt die Steuereinheit des Funktionsmoduls fest, dass ein Fehler vorliegt, kann diese den Stromfluss unterbrechen. Über die Kommunikationseinheit überträgt die Steuereinheit des Funktionsmoduls die Schaltkommandos an die weiteren Funktionsmodule bzw. die weiteren Koppelmodule, so dass diese die Schaltkommandos über die elektrischen und/oder mechanischen Verbindungen zu dem jeweiligen angeschlossenen Schaltgerät übertragen und dadurch den Schaltzustand der einzelnen Schaltgeräte steuern.

Das Funktionsmodul ermittelt anhand der von der Steuereinheit empfangenen Signale der anderen Funktionsmodule bzw. der Koppelmodule die Schaltzustände der jeweiligen Schaltgeräte und nutzt diese Information zur Steuerung der Schaltung.

Bevorzugt ist des Weiteren ein Funktionsmodul, bei dem die Steuereinheit des Funktionsmoduls ausgebildet ist, über ein Schaltkommando eine erste elektrische Schaltung zu betätigen, um eine Änderung des Schaltzustandes des ersten Schaltgerätes zu bewirken, und über wenigstens ein Schaltkommando zumindest eine zweite elektrische Schaltung zu betätigen, um eine Änderung des Schaltzustandes des mindestens einen zweiten Schaltgerätes zu bewirken. Hat die Steuereinheit des Funktionsmoduls alle Schaltzustände aller Schaltgeräte ermittelt, so kann sie gezielt die Schaltzustände der Schaltgeräte verändern. Hierzu bedient sich das Funktionsmodul elektrischer Schaltungen, die in dem Funktionsmodul selbst bzw. die in den verbundenen weiteren Funktionsmodulen bzw. den Koppelmodulen vorgesehen sind. D.h., bevorzugt weist jedes Funktionsmodul und jedes Koppelmodul eine elektrische Schaltung auf, die von der Steuereinheit des Funktionsmoduls angesteuert werden kann. Hierdurch können die Schaltgeräte zentralisiert durch das eine Funktionsmodul angesteuert und entsprechend der Schaltzustände eines jeden Schaltgerätes verändert werden.

Ferner ist ein Funktionsmodul bevorzugt, bei dem das Funktionsmodul oder die Steuereinheit des Funktionsmoduls eine Zeitschalteinrichtung aufweist, um ein Schaltkommando an die erste elektrische Schaltung und damit an das erste Schaltgerät und/oder um ein Schaltkommando an die zumindest eine zweite elektrische Schaltung und damit an das mindestens eine zweite Schaltgerät in Abhängigkeit der erfassten Schaltzustände und/oder mindestens eines Eingangssteuersignals des ersten Schaltgerätes an das mindestens eine weitere Funktionsmodul und/oder das mindestens eine Koppelmodul zu übertragen. Die Zeitschalteinrichtung ermöglicht eine zeitgenaue Ansteuerung der jeweiligen Schaltgeräte. D.h., die Zeitschalteinrichtung ermöglicht die Einhaltung eines Ablaufplanes, anhand dessen die jeweiligen Schaltgeräte ein- bzw. ausgeschaltet oder verriegelt werden. Beispielsweise werden bei einer Stern-Dreieck-Schaltung das Sternschütz und das Dreieckschütz nicht gleichzeitig eingeschaltet. Bevor das Sternschütz eingeschaltet wird, muss zunächst das Dreieckschütz ausgeschaltet werden. Über die Zeitschalteinrichtung kann die Steuereinheit des Funktionsmoduls die jeweiligen Schaltgeräte zeitlich nacheinander oder wenn erforderlich auch gleichzeitig ansteuern.

Vorteilhafterweise ist die Zeitschalteinrichtung des Funktionsmoduls mit einem vorprogrammierten oder vorprogrammierbaren Schaltplan in einem Speichermodul des Funktionsmoduls oder der Steuereinheit des Funktionsmoduls verbunden, so dass sie der Steuereinheit anhand des Schaltplanes vorgegebene Schaltzustände der einzelnen Schaltgeräte zur Verfügung stellen kann. Die Steuereinheit des Funktionsmoduls sendet die in dem Schaltplan vorgegebenen Schaltkommandos zeitlich versetzt an die jeweiligen verbundenen weiteren Funktionsmodule bzw. Koppelmodule, die wiederum über deren elektrische Schaltungen eine Änderung des Schaltgerätezustandes bewirken. Dabei kann die Zeitschalteinrichtung auf vorgegebene Schaltpläne zurückgreifen. Es ist aber auch denkbar, dass über eine dem Funktionsmodul zugeordnete Eingabeeinheit ein Schaltplan erstellt bzw. verändert werden kann. Vorteilhafterweise weist das Speichermodul eine sogenannte Look-up-Tabelle auf, die die aufeinander folgenden Schaltzustände einzelner Schaltgeräte beinhaltet.

Jedes weitere Funktionsmodul bzw. jedes Koppelmodul ist elektrisch und/oder mechanisch mit jeweils einem Schaltgerät gekoppelt. Besonders bevorzugt ist ein Funktionsmodul, das ausgebildet ist, den Schaltzustand des dem Funktionsmodul zugeordneten ersten Schaltgeräts und/oder des dem mindestens einen weiteren Funktionsmodul und/oder des dem mindestens einen Koppelmodul zugeordneten Schaltgeräts über deren jeweilige Spulenanschlüsse zu steuern. D.h., zur Weiterleitung der Schaltkommandos können die jeweiligen Spulenanschlüsse der Schaltgeräte genutzt werden. Zur Erfassung der Schaltzustände der Schaltgeräte, d.h. der Position des Stößels der Schaltgeräte, können neben mechanisch betätigbaren Sensorelementen auch elektronisch, induktiv, kapazitiv oder optisch messende Sensorelemente eingesetzt werden.

Eine weitere bevorzugte Ausführungsform des Funktionsmoduls sieht vor, dass das Funktionsmodul zur Herstellung der elektrischen und/oder mechanischen Verbindung lösbar an dem zugeordneten Schaltgerät befestigt ist oder in das zugeordnete Schaltgerät integriert ist. Insbesondere kann das Funktionsmodul an dem zugeordneten Schaltgerät aufschnappbar und/oder verrastbar sein. D.h., das Funktionsmodul wird vorteilhafterweise kraft- und formschlüssig an einem Schaltgerät befestigt. Hierzu können verschiedene Befestigungselemente eingesetzt werden. So kann die Verbindung beispielsweise durch Schnapp- oder Rastelemente hergestellt werden. Ferner sind Steckelemente denkbar, die in entsprechende Aufnahmen des jeweils anderen Bauelementes eingeführt und in diesen kraftschlüssig gehalten werden. Beim Herstellen der mechanischen Verbindung zwischen Modul und Schaltgerät werden auch die elektrischen Verbindungen hergestellt. Dazu können z.B. Steckverbindungen oder Federkontakte zum Einsatz kommen.

Gemäß dem zweiten Aspekt der Erfindung werden die Aufgaben durch ein Koppelelement für eine Schaltgerätesteuerung, wobei das Koppelmodul eine Kommunikationseinheit und eine mit der Kommunikationseinheit verbundene Steuereinheit aufweist, wobei der Steuereinheit ein Sensorelement zur Erfassung des Schaltzustandes eines dem Koppelmodul zugeordneten Schaltgerätes zugeordnet ist, bei dem die Kommunikationseinheit eine erste Kommunikationsschnittstelle zur Kommunikation mit mindestens einem Funktionsmodul und eine zweite Kommunikationsschnittstelle zur Kommunikation mit mindestens einem weiteren Koppelmodul aufweist, bei dem die Steuereinheit ausgebildet ist, über die Kommunikationseinheit den erfassten Schaltzustand des Schaltgerätes an das Funktionsmodul bzw. an das mindestens eine weitere Koppelmodul zu übertragen, wobei der Steuereinheit eine elektrische Schaltung zugeordnet ist, wobei anhand eines über die Kommunikationseinheit empfangenen Schaltkommandos die elektrische Schaltung betätigbar ist, um eine Änderung des Schaltzustandes des Schaltgerätes zu bewirken, und wobei das Koppelmodul zwei Steuerstromschnittstellen aufweist, gelöst.

Das Koppelmodul weist eine Kommunikationseinheit mit zwei Kommunikationsschnittstellen auf. Die erste Kommunikationsschnittstelle dient zur Herstellung einer Kommunikationsverbindung mit mindestens einem Funktionsmodul und die zweite Kommunikationsschnittstelle dient zur Herstellung einer Kommunikationsverbindung mit mindestens einem weiteren Koppelmodul. Die Kommunikationseinheit ist mit einer Steuereinheit verbunden, die ermöglicht Daten zu verarbeiten. D.h., die Steuereinheit ist ausgebildet, über die Kommunikationseinheit den erfassten Schaltzustand des Schaltgerätes an das Funktionsmodul bzw. an das mindestens eine weitere Koppelmodul zu übertragen. Zur Erfassung des Schaltzustandes des zugeordneten Schaltgerätes ist der Steuereinheit ein Sensorelement zugeordnet. Dieses Sensorelement kann mechanisch, induktiv, kapazitiv, elektrisch oder optisch ausgebildet sein. Dabei erfasst das Sensorelement den Schaltzustand beispielsweise anhand der Position des Stößels eines Betätigungselementes des zugeordneten Schaltgerätes. Ferner ist der Steuereinheit eine elektrische Schaltung zugeordnet. Die Steuereinheit leitet über die Kommunikationseinheit empfangene Schaltkommandos an die elektrische Schaltung zur Betätigung dieser weiter. Durch die Betätigung der elektrischen Schaltung wird eine Änderung des Schaltzustandes des Schaltgerätes bewirkt.

Ein derartiges Koppelmodul für eine Schaltgerätesteuerung reduziert ebenfalls den Verdrahtungsaufwand für komplexe Schaltungen. Da die Ansteuerung der jeweiligen eingesetzten Schaltgeräte der komplexen Schaltungen durch ein Funktionsmodul erfolgt, können die Koppelmodule relativ einfach aufgebaut sein. Die Steuereinheit des Koppelmoduls leitet lediglich Signale und Schaltkommandos weiter. Das Koppelmodul bzw. die Steuereinheit des Koppelmoduls benötigt keine eigene Zeiterfassungseinheit und kein Speichermodul, in der ein Schaltplan hinterlegt ist, um das angeschlossene Schaltgerät anzusteuern. Ein derartiges Koppelmodul dient ferner zur Weiterleitung des Steuerstromes von dem Funktionsmodul zu einem weiteren Koppelmodul oder von einem Koppelmodul zu einem weiteren Koppelmodul. D.h., die Koppelmodule sind so ausgebildet, dass sie in Reihe geschaltet werden können und sowohl zur Steuerstromweiterleitung als auch zur Signal- bzw. Schaltkommandoweiterleitung ausgebildet sind. Die Weiterleitung des Steuerstroms erfolgt über die beidem Steuerstromschnittstellen des Koppelmoduls. Dabei ist bevorzugt vorgesehen, dass eine Steuerstromschnittstelle in einer Kommunikationsschnittstelle bzw. eine Kommunikationsschnittstelle in einer Steuerstromschnittstelle integriert ist. Die Koppelmodule sind dabei derart aufgebaut, dass jedes Koppelmodul für jedes Schaltgerät einsetzbar ist. D.h., durch den einfachen Aufbau ist das Koppelmodul vielseitig einsetzbar. Die Steuereinheit steuert nicht selbstständig den Schaltgerätezustand eines zugeordneten Schaltgerätes, sondern dient lediglich der Weiterleitung von Steuerkommandos bzw. von durch das Sensorelement erfassten Messgrößen.

Eine weitere bevorzugte Ausführungsform des Koppelmoduls sieht vor, dass das Koppelmodul zur Herstellung der elektrischen und/oder mechanischen Verbindung lösbar an dem zugeordneten Schaltgerät befestigt ist oder in das zugeordnete Schaltgerät integriert ist. Insbesondere kann das Koppelmodul an dem zugeordneten Schaltgerät aufschnappbar und/oder verrastbar sein. D.h., das Koppelmodul wird vorteilhafterwiese kraft und formschlüssig an einem Schaltgerät befestigt. Hierzu können verschiedene Befestigungselemente eingesetzt werden. So kann die Verbindung beispielsweise durch Schnappoder Rastelemente hergestellt werden. Ferner sind Steckelement denkbar, die in entsprechende Aufnahmen des jeweils anderen Bauelementes eingeführt und in diesem kraftschlüssig gehalten werden. So sind beispielswiese Käfigzugfederverbindungen denkbar.

Bevorzugt ist des Weiteren ein Funktionsmodul bzw. ein Koppelmodul, dass eine Einrichtung zur Kontaktierung der Hauptstrombahnen des zugeordneten Schaltgerätes aufweist, wobei die Einrichtung zur Kontaktierung der Hauptstrombahnen mit der Steuereinheit des Funktionsmoduls bzw. des Koppelmoduls gekoppelt ist, so dass über ein der jeweiligen Steuereinheit zugeordnetes Sensorelement der Zustand des zugeordneten Schaltgerätes erfassbar und der erfasste Zustand des zugeordneten Schaltgerätes zur Steuerung eines weiteren Schaltgerätes heranziehbar ist. Über die Einrichtung zur Kontaktierung der Hauptstrombahnen des Schaltgerätes können beispielsweise die Spannung, die Phasenlage oder die Phasenfolge, eines Schaltgerätes erfasst werden. Das Sensorelement, über das der Zustand des zugeordneten Schaltgerätes erfasst werden kann, ist vorteilhafterweise in das Funktionsmodul bzw. in das Koppelmodul integriert. Das Sensorelement ist zusätzlich zu dem Sensorelement, welches zur Erfassung des Schaltzustandes dient, vorgesehen.

Gemäß des dritten Aspektes der Erfindung wird die Aufgabe durch ein System zur Schaltgerätesteuerung, wobei das System mindestens ein Funktionsmodul gemäß des ersten Aspektes der Erfindung und mindestens ein Koppelmodul gemäß des zweiten Aspektes der Erfindung aufweist, die über Kommunikationseinheiten mit zugehörigen Kommunikationsschnittstellen und über Steuerstromschnittstellen zur Weiterleitung eines Steuerstromes miteinander verbunden sind, gelöst.

Das Funktionsmodul ist einem ersten Schaltgerät zugeordnet bzw. mit diesem elektrisch und/oder mechanisch verbunden und das wenigstens eine Koppelmodul ist einem weiteren Schaltgerät zugeordnet bzw. mit diesem elektrisch und/oder mechanisch verbunden.

Ein derartiges System ermöglicht eine deutliche Reduzierung des Verdrahtungsaufwandes einer komplexen Schaltung, die mehrere Schaltgeräte aufweist. Dadurch, dass die gesamte Ansteuerung aller Schaltgeräte durch ein einziges Funktionsmodul erfolgt, können die Koppelmodule einfach aufgebaut werden. Die Steuerstromversorgung eines derartigen Systems erfolgt über das Funktionsmodul. D.h., das Funktionsmodul leitet den Steuerstrom über eine Steuerstromschnittstelle an ein Koppelmodul weiter. Dieses Koppelmodul wiederum leitet den Steuerstrom an ein weiteres Koppelmodul weiter. D.h., das Funktionsmodul und die weiteren Koppelmodule sind in Reihe zueinander geschaltet. Hierdurch ist der Verdrahtungsaufwand reduziert und die Form der Verdrahtung vorgegeben. Ferner erfolgt die Kommunikation ebenfalls über die Reihenschaltung der Module. Ausgehend von dem Funktionsmodul wird ein Schaltkommando an ein Koppelmodul gesendet. Ist das Schaltkommando nicht für das erste in Reihe geschaltete Koppelmodul vorgesehen, leitet dieses das Schaltkommando weiter, bis das zutreffende Koppelmodul erreicht ist. Auf diese Art und Weise entfallen die sonst übliche externe Steuerstromverdrahtung zu jedem Schaltgerät und die Verdrahtung jedes Schaltgerätes zu einer Zeiterfassungseinrichtung bzw. einem Zeitrelais sowie zu einem Hilfsschalter.

Bevorzugt ist dabei ein System zur Schaltgerätesteuerung, bei dem das mindestens eine Funktionsmodul bzw. das mindestens eine Koppelmodul mittels eines Verbindungskabels, insbesondere eines Flachbandkabels, und/oder eines Brückensteckers miteinander verbunden sind. Durch diese kann das Funktionsmodul einfach an ein weiteres Funktionsmodul bzw. an ein Koppelmodul angeschlossen werden. Gleiches gilt für die Verbindung der Koppelmodule untereinander. Die Verbindungskabel bzw. die Brückenstecker werden einfach in die entsprechend vorgesehenen Schnittstellen, d.h. die Kommunikationsschnittstellen und die Steuerstromschnittstellen, gesteckt, so dass hierüber sowohl der Steuerstrom als auch Daten übertragen werden können. Durch die Schnittstellen der Funktionsmodule und der Koppelmodule ist die Art der Verbindung der Module miteinander genormt bzw. vorgegeben.

Ein derartiges Funktionsmodul und ein derartiges Koppelmodul für eine Schaltgerätesteuerung sowie ein derartiges System zur Schaltgerätesteuerung ermöglichen eine schnelle und sichere Montage der Module bzw. des Systems an eine komplexe Schaltung, die mehrere Schaltgeräte aufweist. Aufgrund der Einfachheit der Module und damit des Systems zur Schaltgerätesteuerung kann die Montage der Module auch von einem ungeschulten Personal durchgeführt werden. Da die Ansteuerung und die Energiezufuhr zu den Koppelmodulen bzw. den weiteren Funktionsmodulen und damit zu den jeweiligen Schaltgeräten über die Verbindungskabel bzw. die Brückenstecker erfolgt, sind keine weiteren Steueranschlüsse an den Schaltgeräten notwendig. Die Reihenfolge der Verdrahtung, d.h. der Hauptstromkreise und der Steuerstromkreise, ist durch die Art des Aufbaus des Systems beliebig. Durch eine geeignete interne Schaltung der Koppelmodule können diese für eine Stern- bzw. Dreieckansteuerung identisch ausgebildet sein, wodurch die Varianz der Koppelmodule verringert werden kann. Die Koppelmodule und das Funktionsmodul sind durch einen geeigneten Aufbau für unterschiedliche Schaltgerätegrößen, insbesondere Schützgrößen, verwendbar. Durch diese Art des Aufbaus des Funktionsmoduls, des Koppelmoduls und damit des Systems zur Schaltgerätesteuerung ist eine breite Anwendung bei den Schützsteuerungen möglich.

Wenn ein System zur Schaltgerätesteuerung mindestens ein Funktionsmodul und mindestens ein Koppelmodul aufweist, die über Kommunikationsanschlüsse miteinander verbunden sind, ist es möglich, den Verdrahtungsaufwand für die Steuerverdrahtung zu reduzieren.

Bevorzugt ist ferner ein Schaltsystem zum Schalten von mehrphasigen Stromkreisen, mit einer Anzahl von an elektrische Verbraucher anschließbaren bzw. angeschlossenen Schaltgeräten wobei das Schaltsystem ein an die Schaltgeräte integriertes oder integrierbares bzw. angekoppeltes oder ankoppelbares System zur Schaltgerätesteuerung gemäß dem dritten Aspekt der Erfindung aufweist. Ein Schaltsystem zum Schalten von mehrphasigen Stromkreisen, mit einer Anzahl von an elektrische Verbraucher anschließbaren bzw. angeschlossenen Schaltgeräten kann, wenn es ein an die Schaltgeräte integriertes oder integrierbares bzw. angekoppeltes oder ankoppelbares System zur Schaltgerätesteuerung aufweist, schneller verdrahtet werden als bisher.

Wenn das Funktionsmodul mindestens eine Zeitschalteinrichtung aufweist, und wenn die Steuervorrichtung ausgebildet ist, das Versenden eines Schaltkommandos bzw. die Einwirkung auf eine elektrische Schaltung zur Änderung des Schaltzustands des Schaltgerätes zu verzögern, bis die Zeitschalteinrichtung das Vergehen einer vorbestimmten Zeit gemessen hat, kann die zeitliche Steuerung auf eine einfache Weise realisiert werden. Die zusätzliche Abfrage- und Steuerverdrahtung, die für Applikationen mit einem oder mehreren Zeitrelais kann entfallen.

Wenn das Funktionsmodul ein vorprogrammiertes oder vorprogrammierbares Speichermodul aufweist, das ausgebildet ist, der Steuervorrichtung aufeinander folgende Schaltzustände einzelner Schaltgeräte zur Verfügung zu stellen, ist es möglich, mit einem Funktionsmodultyp unterschiedliche Schaltungen vorzunehmen. Wenn das Speichermodul eine Look-up-Tabelle aufweist, die die aufeinander folgenden Schaltzustände einzelner Schaltgeräte beinhaltet, kann der Verwaltungsaufwand reduziert und das Programmieren des Funktionsmoduls einfacher realisiert werden.

Vorteilhaft ist das Funktionsmodul auf das zugeordnete Schaltgerät aufschnappbar. Dann kann das als Erweiterung getrennt vertrieben werden. Es ist aber auch möglich, das Funktionsmodul in das zugeordnete Schaltgerät zu integrieren, was den Installationsaufwand noch reduzieren kann. Durch den modularen Aufbau der Funktions- bzw. Koppelmodule kann die externe Steuerverdrahtung sowie mögliche Zeitrelais und die Hilfsschaltglieder entfallen.

Im Folgenden werden einige Aspekte der Erfindung anhand der in den beigefügten Zeichnungen dargestellten Beispiele näher erläutert.

Es zeigen:
- FIG 1: eine Stern-Dreieck -Verdrahtung für Schaltgeräte in einer ersten Baugröße gemäß des Standes der Technik;
- FIG 2: eine Stern-Dreieck -Verdrahtung für Schaltgeräte in einer zweiten Baugröße des Standes der Technik;
- FIG 3: ein Funktionsmodul mit einem zu dem Funktionsmodul zugeordneten Schaltgerät;
- FIG 4: ein Koppelmodul mit einem zu dem Koppelmodul zugeordneten Schaltgerät;
- FIG 5: ein Funktionsmodul und zwei Koppelmodule, jeweils mit einem Schaltgerät; und
- FIG 6: die Prinzipskizze für eine Stern-Dreieck-Schaltung.

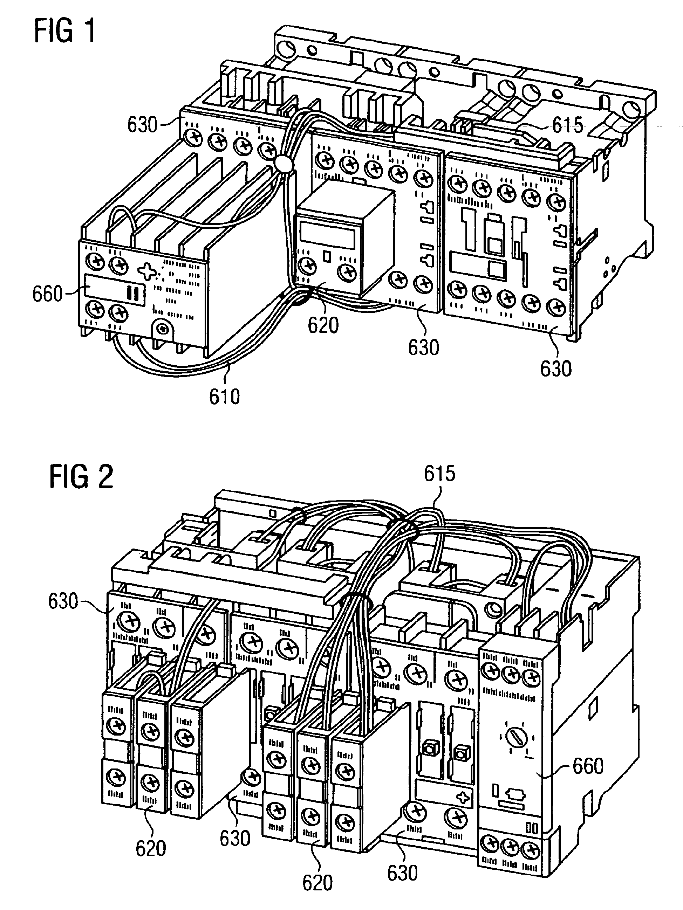

Fig. 1 zeigt eine erste bekannte Stern-Dreieck-Verdrahtung mit drei Schützen 630, die über Abfrage- und Steuerverdrahtungen 610, 615 und mit einem Hilfsschalter 620 zueinander verbunden sind. Die zeitliche Steuerung zum Schalten vom Sternschutz auf Dreieckschütz wird vom Zeitrelais 660 übernommen.

Fig. 2 zeigt eine zweite bekannte Stern-Dreieck-Verdrahtung mit drei Schützen 630, die anhand ihrer etwas größeren Baugröße ein gesondertes Zeitrelais 660 benötigen. Insgesamt werden sechs Hilfsschalter 620 und mehr Kabelverbindungen 615 als in der in Fig. 1 dargestellten Verdrahtung benötigt.

Eine der Erfindung zugrunde liegende Idee ist die Realisierung der Abfrage- und Steuerverdrahtung durch aufsteckbare oder integrierbare Funktions- und Koppelmodule auf Schaltgeräte mit mechanischer und elektrischer Kopplung zum darunterliegenden Schaltgerät. Die Verbindung der Funktions- und Koppelmodule untereinander erfolgt mit einer geeigneten elektrischen, Verbindung.

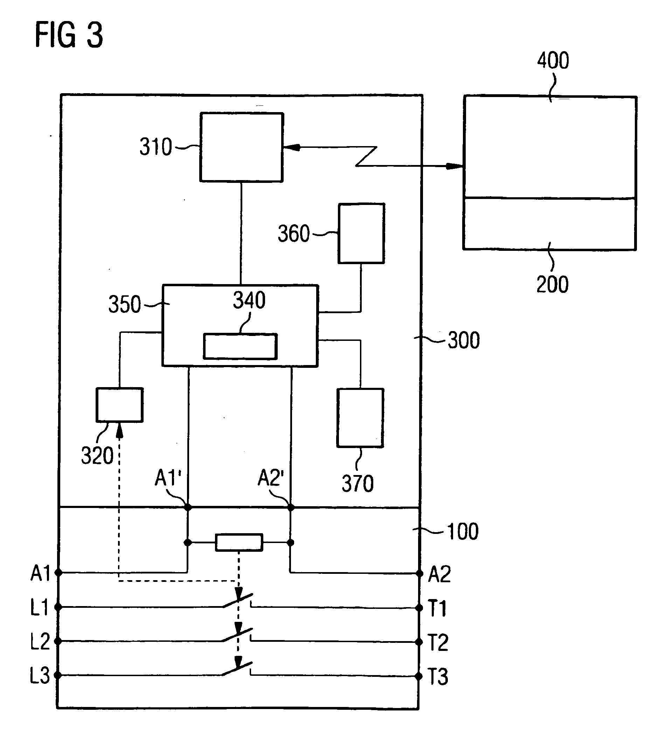

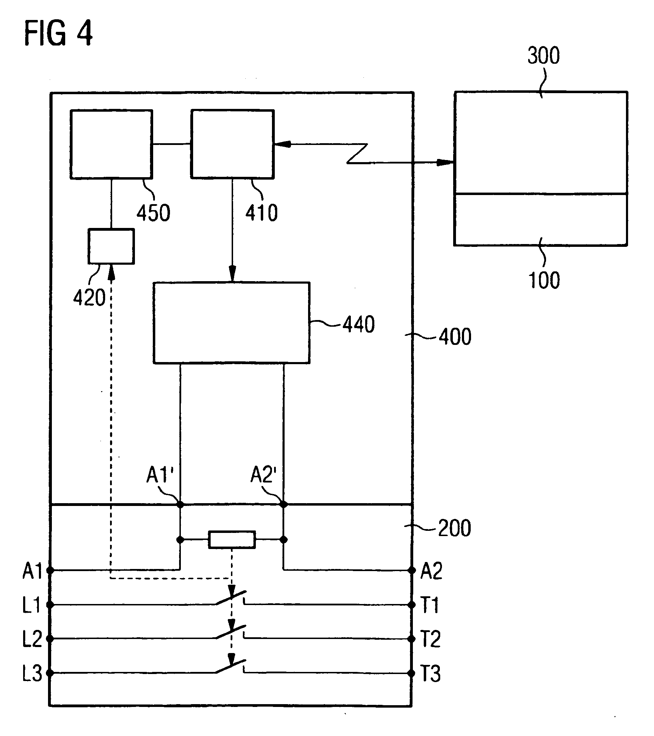

In den Fig. 3 und 4 wird der Aufbau der Funktionsmodule und Koppelmodule erläutert.

Ein Funktionsmodul 300, wie in Fig. 3 dargestellt, beinhaltet die Funktionslogik wie Zeiteinstellung und Verriegelung und zusätzlich die Ansteuerung und Abfrage des Schaltzustandes des zugeordneten ersten Schaltgerätes 100.

Das Funktionsmodul 300 für die Schaltgerätesteuerung weist mindestens eine Kommunikationseinheit 310 mit einer Kommunikationsschnittstelle zur Kommunikation mit mindestens einem weiteren Funktionsmodul 300 bzw. einem Koppelmodul 400 auf. Die Kommunikationseinheit 310 kann drahtverbunden oder drahtlos implementiert werden.

Das Funktionsmodul 300 weist außerdem mindestens ein Sensorelement 320 zur Abfrage des Schaltzustands eines zu dem Funktionsmodul 300 zugeordneten ersten Schaltgerätes 100 auf. Das Sensorelement 320 kann beispielsweise durch einen mechanischen Abgriff in einen Stößel eines Betätigungselementes des ersten Schaltgerätes 100 den Schaltzustand des ersten Schaltgerätes 100 ermitteln, es ist aber auch möglich, induktive, kapazitive oder optische Sensorelemente zu benutzen.

Das Funktionsmodul 300 weist ferner mindestens eine elektrische Schaltung 340 zur Änderung des Schaltzustands des Schaltgerätes 100, sowie eine Steuereinheit 350 auf. Die elektrische Schaltung 340 kann dabei in der Steuereinheit 350 integriert oder dieser zugeordnet sein. In diesem Ausführungsbeispiel ist die elektrische Schaltung 340 in der Steuereinheit 350 integriert.

Die Steuereinheit 350 ist ausgebildet, Schaltzustandsinformationen von mindestens einem weiteren Funktionsmodul bzw. wenigstens einem Koppelmodul 400 bezüglich der diesen zugeordneten Schaltgeräten 200 über die Kommunikationseinheit 310 zu empfangen. Ferner kann die Steuereinheit 350 des Funktionsmoduls 300 Schaltkommandos SK über die Kommunikationseinheit 310 bzw. die Kommunikationsschnittstelle der Kommunikationseinheit 310 an die weiteren Funktionsmodule bzw. Koppelmodule 400 übertragen, um eine Änderung des Schaltzustands des zu dem mindestens einen Funktionsmodul bzw. dem mindestens einen Koppelmodul 400 zugeordneten Schaltgerätes 200 zu bewirken.

Vorteilhafterweise weist das Funktionsmodul 300 mindestens eine Zeitschalteinrichtung 360 auf. Über diese Zeitschalteinrichtung 360 kann die Steuereinheit 350 des Funktionsmoduls 300 das wenigstens eine weitere Funktionsmodul bzw. das wenigstens eine weitere Koppelmodul 400 zu bestimmten Zeiten ansteuern. Dabei greift die Zeitschalteinrichtung 360 bevorzugt auf einen Schaltplan zur Ansteuerung der Schaltgeräte 100, 200 der komplexen Schaltung zurück. Hierzu weist das Funktionsmodul 300 vorteilhafterweise ein Speichermodul 370 auf, in dem der wenigstens eine Schaltplan abgelegt ist. Dabei kann der Schaltplan vorprogrammiert oder programmierbar sein. Zur Programmierung des Schaltplanes ist dem Funktionsmodul 300 bzw. der Steuereinheit 350 des Funktionsmoduls 300 eine nicht dargestellte Eingabeeinheit zugeordnet.

Der oder die Schaltplan/Schaltpläne in dem Speichermodul 370 sind derart ausgebildet, dass die Zeitschalteinrichtung 360 der Steuervorrichtung 350 aufeinander folgende Schaltzustände einzelner Schaltgeräte 100, 200 zur Verfügung stellen kann.

Das Speichermodul 370 kann als Schaltplan eine Look-up-Tabelle aufweisen, die die aufeinander folgenden Schaltzustände einzelner Schaltgeräte 100, 200 beinhaltet.

Das Funktionsmodul 300 ist bevorzugt auf das zugeordnete Schaltgerät 100 aufschnappbar. Es ist allerdings auch möglich, dass das Funktionsmodul 300 in das zugeordnete Schaltgerät 100 integriert ist.

Das Koppelmodul 400, wie in Fig. 4 dargestellt, welches dem Funktionsmodul 300 nachgeschaltet ist, dient zur Ansteuerung bzw. zur Abfrage des Schaltzustandes des dem Koppelmodul 400 zugeordneten Schaltgerätes 200.

Das Koppelmodul 400 für die Schaltgerätesteuerung weist mindestens eine Kommunikationseinheit 410 mit einer Kommunikationsschnittstelle zur Kommunikation mit mindestens einem Funktionsmodul bzw. einem weiteren Koppelmodul 400 und mindestens ein Sensorelement 420 zur Abfrage des Schaltzustandes des dem Koppelmodul 400 zugeordneten Schaltgerätes 200 auf. Die Kommunikationseinheit 410 bzw. die Kommunikationsschnittstelle kann drahtlos oder drahtverbunden implementiert werden.

Das Koppelmodul 400 weist ferner mindestens eine elektrische Schaltung 440 zur Änderung des Schaltzustands des Schaltgerätes 200 und mindestens eine Steuereinheit 450 auf.

Die Steuereinheit 450 ist ausgebildet, den abgefragten Schaltzustand des Schaltgerätes 200 über die Kommunikationseinheit 410 bzw. über die Kommunikationsschnittstelle der Kommunikationseinheit 410 an das Funktionsmodul 300 zu übertragen, ein Schaltkommando SK über die Kommunikationseinheit 410 bzw. über die Kommunikationsschnittstelle der Kommunikationseinheit 410 zu empfangen, und anhand des Schaltkommandos SK die elektrische Schaltung 440 zur Änderung des Schaltzustands des Schaltgerätes 200 anzusteuern, so dass das Schaltgerät 200 einen dem Schaltkommando SK entsprechenden Schaltzustand erreichen kann.

Die Steuereinheit 450 ist einfach ausgebildet. Sie leitet die von dem Funktionsmodul 300 empfangenen Schaltkommandos SK lediglich an die elektrische Schaltung 440 weiter. Über die Schaltkommandos SK steuert das Funktionsmodul 300 den Schaltzustand des an das Koppelmodul 400 angeschlossenen Schaltgerätes 200.

Das Koppelmodul 400 kann, wie das Funktionsmodul 300 auch, auf das ihnen zugeordnete Schaltgerät 100, 200 aufgeschnappt sein. Es ist auch hier möglich, dass das Koppelmodul 400 in dem ihm zugeordneten Schaltgerät 430 integriert ist.

Zur Steuerstromversorgung weist das Funktionsmodul 300 zwei Steuerstromschnittstellen auf. Die erste Steuerstromschnittstelle ist ausgebildet, um das Funktionsmodul 300 mit einem Steuerstrom zu versorgen. Dabei kann der Steuerstrom von dem ersten Schaltgerät 100 oder von einer externen Energieversorgungseinheit zu dem Funktionsmodul geleitet werden. Wird der Steuerstrom über das dem Funktionsmodul 300 zugeordnete erste Schaltgerät 100 geliefert, so können die Spulenanschlüsse A1', A2' des ersten Schaltgerätes 100 hierzu genutzt werden.

Für den Fall, dass der Steuerstrom über das erste Schaltgerät 100 zu dem Funktionsmodul 300 geliefert wird, benötigt das Funktionsmodul 300 nicht zwingend ein Sensorelement 320 zum Erfassen des Schaltzustandes des ersten Schaltgerätes 100. Die Schaltzustandsinformationen können über den Steuerstrom direkt zu dem Funktionsmodul 300 übertragen werden. Bezieht das Funktionsmodul 300 den Steuerstrom über eine externe Energieversorgungseinheit, so muss der Schaltzustand des ersten Schaltgerätes 100 mittels eines Sensorelementes 320 des Funktionsmoduls 300 erfasst werden.

Die zweite Steuerstromschnittstelle des Funktionsmoduls 300 dient zur Weiterleitung des Steuerstroms an die verbundenen weiteren Funktionsmodule bzw. die weiteren Koppelmodule 400 und damit an die weiteren Schaltgeräte 200. Dabei sind die Module 300, 400 in Reihe geschaltet.

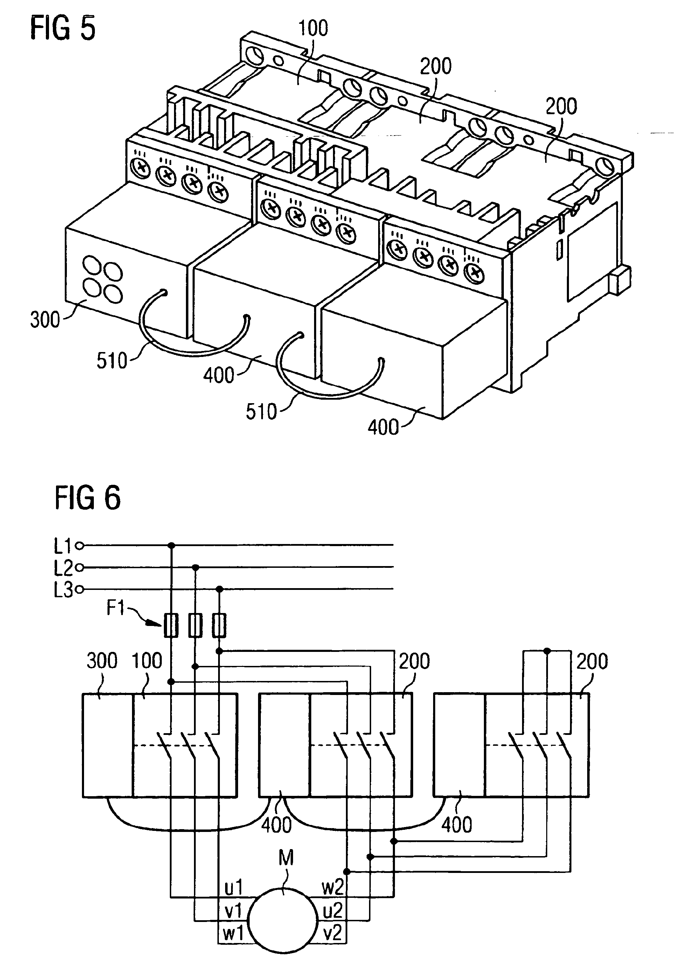

Die Verbindungen zwischen den Funktions- und Koppelmodulen 300, 400 werden durch geeignete Verbindungsleitungen realisiert, wie in Fig. 5 gezeigt.

Die Verbindungen werden bevorzugt durch elektrische Verbindungskabel, z.B. durch Flachbandleitungen 510 realisiert. Alternativ kann die elektrische Verbindung etwa mit einem Brückenstecker implementiert werden.

In FIG 5 ist auf jedes der drei Schütze 100, 200 der Stern-Dreieck-Kombination, d.h. auf das Netz-, das Stern- und das Dreieckschütz, ein Funktionsmodul 300 bzw. ein Koppelmodul 400 aufgesteckt, die den kompletten Stern-Dreieck-Ablauf inklusive Verriegelung, Hochlaufzeit und Umschaltpause steuern. Zwischen den jeweiligen Modulen 300, 400 ist jeweils nur ein Verbindungskabel 510 vorgesehen, über das sowohl die Kommunikation, als auch die Steuerstromversorgung realisiert wird.

Fig. 6 erläutert die in Fig. 5 gezeigte Stern-Dreieck-Schaltung. Das Funktionsmodul 300 steuert das Netzschütz 100, das mit den Wicklungen u1, v1, w1 eines dreiphasigen Elektromotors M verbunden ist. Das Sternschütz 200 und das Dreieckschütz 20 sind mit den Wicklungen u2, v2, w2 des dreiphasigen Elektromotors M verbunden. Über die Koppelmodule 400 steuert das Funktionsmodul 300 das Sternschütz bzw. das Dreieckschütz 200. D.h., das Funktionsmodul 300 steuert direkt den Schaltzustand des Netzschützes 100 bzw. indirekt über die Koppelmodule 400 den Schaltzustand des jeweils zu einem Koppelmodul 400 zugeordneten Schützes 200. Mit F1 ist eine dreipolige Motorsicherung bezeichnet.

Analog zu dieser Stern-Dreieck-Schaltung sind weitere Varianten von Schaltgerätekombinationen mit Funktiönsmodulen 300 und Koppelmodulen 400 möglich. Besonders einfach können mittel eines derartigen Funktionsmoduls 300 und wenigstens eines derartigen Koppelmoduls 400 Schaltungen für Starter für Motoren mit mehreren Drehzahlen, Dahlander-Schaltungen, Wendeschützschaltungen usw. realisiert werden.

Damit ist eine schnelle und sichere Montage des Systems, bestehend aus wenigstens einem Funktionsmodul 300 und aus wenigstens einem Koppelmodul 400 beim Kunden gegeben, wobei diese Montage auch von ungeschultem Personal durchgeführt werden kann. Da die Ansteuerung der Koppelmodule 400 und deren Energiezufuhr über die Verbindungsleitung 510 zwischen dem Funktionsmodul 300 und einem Koppelmodul 400 sowie unter den Koppelmodulen 400 selbst erfolgt, sind keine weiteren Steueranschlüsse an den weiteren Schaltgeräten 200 notwendig. Die Reihenfolge der Verdrahtung, d.h. des Hauptstromkreises und des Steuerstromkreises, ist durch diese Art des Aufbaus des Systems zur Schaltgerätesteuerung beliebig. Durch eine geeignete Schaltung der Koppelmodule 400 sind diese für eine Stern- bzw. eine Dreieckansteuerung identisch, dadurch kann die Varianz dieser Koppelmodule 400 verringert werden. Die Module 300, 400 sind durch geeigneten mechanischen Aufbau für unterschiedliche Schaltgerätegrößen, insbesondere Schützgrößen, verwendbar.

Durch diese Bauart wird eine breite Anwendung bei den Schützsteuerungen ermöglicht.

### Bezugszeichenliste

- 100: erstes Schaltgerät
- 200: zweites Schaltgerät
- 300: Funktionsmodul
- 310: Kommunikationseinheit
- 320: Sensorelement
- 340: erste elektrische Schaltung
- 350: Steuereinheit
- 360: Zeitschalteinrichtung
- 370: Speichermodul
- 400: Koppelmodul
- 410: Kommunikationseinheit
- 420: Sensorelement
- 440: zweite elektrische Schaltung
- 450: Steuereinheit
- 510: Verbindungskabel
- 610: Abfrageverdrahtungen
- 615: Steuerverdrahtungen
- 620: Hilfsschalter
- 630: Schütz
- 660: Zeitrelais

- SK: Schaltkommando
- AE: übertragene Signale
- A1, A2: Spulenanschlüsse
- A1', A2': Spulenanschlüsse
- L1, L2, L3: eingehende Hauptstrombahnen T1, T2, T3 abgehende Hauptstrombahnen
- M: Elektromotor
- u1, v1, w1: Wicklungsanschlüsse des Elektromotors
- u1, v1, w1: Wicklungsanschlüsse des Elektromotors
- F1: dreipolige Absicherung

## Patentansprüche

1. Funktionsmodul (300) für eine Schaltgerätesteuerung, wobei das Funktionsmodul (300)
- eine Kommunikationseinheit (310) mit einer Kommunikationsschnittstelle zur Kommunikation mit mindestens einem weiteren Funktionsmodul und/oder mindestens einem Koppelmodul (400),
- eine mit der Kommunikationseinheit (310) verbundene Steuereinheit (350), die ausgebildet ist, von dem mindestens einem weiteren Funktionsmodul und/oder dem mindestens einem Koppelmodul (400) zu der Kommunikationseinheit (310) übertragene Signale (AE) zu empfangen und Schaltkommandos (SK) über die Kommunikationseinheit (310) zu dem mindestens einem weiteren Funktionsmodul und/oder dem mindestens einem Koppelmodul (400) zu übertragen, aufweist; **gekennzeichnet durch**
- eine erste Steuerstromschnittstelle zur elektrischen Verbindung zu einem ersten Schaltgerät (100) oder einer externen Energieversorgungseinheit, und
- eine zweite Steuerstromschnittstelle zur Steuerstromversorgung des mindestens einen weiteren Funktionsmoduls und/oder des mindestens einen Koppelmoduls (400).

2. Funktionsmodul (300) nach Anspruch 1, **dadurch gekennzeichnet, dass** die zweite Steuerstromschnittstelle in der Kommunikationsschnittstelle der Kommunikationseinheit (310) oder die Kommunikationsschnittstelle der Kommunikationseinheit (310) in der zweiten Steuerstromschnittstelle integriert ist.

3. Funktionsmodul (300) nach Anspruch 1 oder 2, **dadurch gekennzeichnet, dass** das Funktionsmodul (300) elektrisch und mechanisch mit dem ersten Schaltgerät (100) verbunden ist, um über ein der Steuereinheit (350) zugeordnetes Sensorelement (320) den Schaltzustand des ersten Schaltgerätes (100) zu erfassen und zur Übertragung von Schaltkommandos (SK) an das erste Schaltgerät (100).

4. Funktionsmodul (300) nach Anspruch 3, **dadurch gekennzeichnet, dass** die Steuereinheit (350) ausgebildet ist, anhand der von dem Sensorelement (320) erfassten Messgrößen den Schaltzustand des ersten Schaltgerätes (100) und/oder den Schaltzustand des mindestens einen zweiten Schaltgerätes (200), welches mit dem mindestens einem weiteren Funktionsmodul und/oder dem mindestens einem Koppelmodul (400) elektrisch verbunden ist, anhand der empfangenen Signale (AE) zu ermitteln, wobei das mindestens eine weitere Funktionsmodul und/oder das mindestens eine Koppelmodul (400) ein Sensorelement (420) zur Erfassung des Schaltzustandes des mindestens einen zweiten Schaltgerätes (200) aufweist.

5. Funktionsmodul (300) nach einem der vorhergehenden Ansprüche 1 bis 4, **dadurch gekennzeichnet, dass** die Steuereinheit (350) des Funktionsmoduls (300) ausgebildet ist, über ein Schaltkommando (SK) eine erste elektrische Schaltung (340) zu betätigen, um eine Änderung des Schaltzustandes des ersten Schaltgerätes (100) zu bewirken, und über wenigstens ein Schaltkommando (SK) zumindest eine zweite elektrische Schaltung (440) zu betätigen, um eine Änderung des Schaltzustandes des mindestens einen zweiten Schaltgerätes (200) zu bewirken.

6. Funktionsmodul (300) nach Anspruch 5, **dadurch gekennzeichnet, dass** das Funktionsmodul (300) oder die Steuereinheit (350) des Funktionsmoduls (300) eine Zeitschalteinrichtung (360) aufweist, um ein Schaltkommando (SK) an die erste elektrische Schaltung (340) und damit an das erste Schaltgerät (100) und/oder um ein Schaltkommando (SK) an die zumindest eine zweite elektrische Schaltung (440) und damit an das mindestens eine zweite Schaltgerät (200) in Abhängigkeit der erfassten Schaltzustände und/oder mindestens eines Eingangssteuersignals des ersten Schaltgerätes (100) an das mindestens eine weitere Funktionsmodul und/oder das mindestens eine Koppelmodul (400) zu übertragen.

7. Funktionsmodul (300) nach Anspruch 6, **dadurch gekennzeichnet, dass** die Zeitschalteinrichtung (360) mit einem vorprogrammierten oder vorprogrammierbaren Schaltplan in einem Speichermodul (370) des Funktionsmoduls (300) oder der Steuereinheit (350) des Funktionsmoduls (300) verbunden ist, um der Steuervorrichtung (350) anhand des Schaltplanes vorgegebene Schaltzustände der einzelnen Schaltgeräte (100, 200) zur Verfügung zu stellen.

8. Funktionsmodul (300) nach einem der vorhergehenden Ansprüche 5 bis 7, **dadurch gekennzeichnet, dass** das Funktionsmodul (300) ausgebildet ist, den Schaltzustand des dem Funktionsmodul (300) zugeordneten ersten Schaltgeräts (100) und/oder des dem mindestens einen weiteren Funktionsmoduls und/oder des dem mindestens einen Koppelmodul (400) zugeordneten Schaltgeräts (200) über deren jeweilige Spulenanschlüsse (A1' A2') zu steuern.

9. Funktionsmodul (300) nach einem der vorhergehenden Ansprüche 1 bis 8, **dadurch gekennzeichnet, dass** das Funktionsmodul (300, 400) zur Herstellung der elektrischen und/oder mechanischen Verbindung lösbar an dem zugeordneten Schaltgerät (100, 200) befestigt ist, insbesondere an dieses aufschnappbar und/oder verrastbar ist, oder in das zugeordnete Schaltgerät (100, 200) integriert ist.

10. Koppelmodul (400) für eine Schaltgerätesteuerung, wobei das Koppelmodul (400) eine Kommunikationseinheit (410) und eine mit der Kommunikationseinheit (410) verbundene Steuereinheit (450) aufweist, **dadurch gekennzeichnet, dass** der Steuereinheit (450) ein Sensorelement (420) zur Erfassung des Schaltzustandes eines dem Koppelmodul zugeordneten Schaltgerätes (200) zugeordnet ist, dass die Kommunikationseinheit (410) eine erste Kommunikationsschnittstelle zur Kommunikation mit mindestens einem Funktionsmodul (300) und eine zweite Kommunikationsschnittstelle zur Kommunikation mit mindestens einem weiteren Koppelmodul (400) aufweist, dass die Steuereinheit (450) ausgebildet ist, über die Kommunikationseinheit (410) den erfassten Schaltzustand des Schaltgerätes (200) an das Funktionsmodul (300) bzw. an das mindestens eine weitere Koppelmodul (400) zu übertragen, dass der Steuereinheit (450) eine elektrische Schaltung (440) zugeordnet ist, dass anhand eines über die Kommunikationseinheit (410) empfangenen Schaltkommandos (SK) die elektrische Schaltung (440) betätigbar ist, um eine Änderung des Schaltzustandes des Schaltgerätes (200) zu bewirken, und dass das Koppelmodul zwei Steuerstromschnittstellen aufweist.

11. Koppelmodul (400) nach Anspruch 10, **dadurch gekennzeichnet, dass** das Koppelmodul (400) zur Herstellung einer elektrischen und/oder mechanischen Verbindung lösbar an dem zugeordneten Schaltgerät (200) befestigt ist, insbesondere an dieses aufschnappbar und/oder verrastbar ist, oder in das zugeordnete Schaltgerät (200) integriert ist.

12. Funktionsmodul (300) nach einem der vorhergehenden Ansprüche 1 bis 9 oder Koppelmodul (400) nach Anspruch 10 oder 11, **dadurch gekennzeichnet, dass** dieses eine Einrichtung zur Kontaktierung der Hauptstrombahnen (L1, L2. L3; T1, T2, T3) des zugeordneten Schaltgerätes (100, 200) aufweist, wobei die Einrichtung zur Kontaktierung der Hauptstrombahnen (L1, L2. L3; T1, T2, T3) mit der Steuereinheit (350, 450) des Funktionsmoduls (300) bzw. des Koppelmoduls (400) gekoppelt ist, so dass über ein der Steuereinheit (350, 450) zugeordnetes Sensorelement (320, 420) der Zustand des zugeordneten Schaltgerätes (100, 200) erfassbar und der erfasste Zustand des zugeordneten Schaltgerätes (100, 200) zur Steuerung eines weiteren Schaltgerätes heranziehbar ist.

13. System zur Schaltgerätesteuerung, **dadurch gekennzeichnet, dass** das System mindestens ein Funktionsmodul (300) nach einem der Ansprüche 1 bis 9 und mindestens ein Koppelmodul (400) nach einem der Ansprüche 10 bis 12 aufweist, die über Kommunikationseinheiten (310, 410) mit zugehörigen Kommunikationsschnittstellen und über Steuerstromschnittstellen zur Weiterleitung eines Steuerstromes miteinander verbunden sind.

14. System zur Schaltgerätesteuerung nach Anspruch 13, **dadurch gekennzeichnet, dass** das mindestens eine Funktionsmodul (300) bzw. das mindestens eine Koppelmodul (400) mittels eines Verbindungskabels (510), insbesondere eines Flachbandkabels, und/oder eines Brückensteckers miteinander verbunden sind.

## Claims

1. Function module (300) for switching device control, the function module (300) having
- a communication unit (310) with a communication interface for communicating with at least one further function module and/or at least one coupling module (400),
- a control unit (350), which is connected to the communication unit (310) and is designed to receive signals (AE) transmitted by the at least one further function module and/or the at least one coupling module (400) to the communication unit (310) and to transmit switching commands (SK) via the communication unit (310) to the at least one further function module and/or the at least one coupling module (400), **characterized by**
- a first control current interface for electrical connection to a first switching device (100) or an external power supply unit, and
- a second control current interface for supplying control current to the at least one further function module and/or the at least one coupling module (400).

2. Function module (300) according to Claim 1, **characterized in that** the second control current interface is integrated in the communication interface of the communication unit (310) or the communication interface of the communication unit (310) is integrated in the second control current interface.

3. Function module (300) according to Claim 1 or 2, **characterized in that** the function module (300) is connected electrically and mechanically to the first switching device (100) in order to detect the switching state of the first switching device (100) via a sensor element (320) associated with the control unit (350) and in order to transmit switching commands (SK) to the first switching device (100).

4. Function module (300) according to Claim 3, **characterized in that** the control unit (350) is designed to use the measured variables detected by the sensor element (320) to determine the switching state of the first switching device (100) and/or the switching state of the at least one second switching device (200), which is connected electrically to the at least one further function module and/or the at least one coupling module (400), on the basis of the received signals (AE), the at least one further function module and/or the at least one coupling module (400) having a sensor element (420) for detecting the switching state of the at least one second switching device (200).

5. Function module (300) according to one of the preceding Claims 1 to 4, **characterized in that** the control unit (350) of the function module (300) is designed to actuate a first electrical circuit (340) via a switching command (SK) in order to bring about a change in the switching state of the first switching device (100) and to actuate at least one second electrical circuit (440) via at least one switching command (SK) in order to bring about a change in the switching state of the at least one second switching device (200).

6. Function module (300) according to Claim 5, **characterized in that** the function module (300) or the control unit (350) of the function module (300) has a time-delay switching device (360) in order to transmit a switching command (SK) to the first electrical circuit (340) and therefore to the first switching device (100) and/or in order to transmit a switching command (SK) to the at least one second electrical circuit (440) and therefore to the at least one second switching device (200) depending on the detected switching states and/or at least one input control signal of the first switching device (100) to the at least one further function module and/or the at least one coupling module (400).

7. Function module (300) according to Claim 6, **characterized in that** the time-delay switching device (360) is connected to a preprogrammed or preprogrammable circuit diagram in a memory module (370) of the function module (300) or the control unit (350) of the function module (300) in order to provide the control apparatus (350) with switching states of the individual switching devices (100, 200) which are predetermined on the basis of the circuit diagram.

8. Function module (300) according to one of the preceding Claims 5 to 7, **characterized in that** the function module (300) is designed to control the switching state of the first switching device (100), which is associated with the function module (300), and/or of the at least one further function module and/or of the switching device (200) associated with the at least one coupling module (400), via the respective coil terminals (A1', A2') thereof.

9. Function module (300) according to one of the preceding Claims 1 to 8, **characterized in that** the function module (300, 400) is fastened detachably on the associated switching device (100, 200), in particular can be snapped and/or latched onto said switching device, or is integrated in the associated switching device (100, 200), so as to produce the electrical and/or mechanical connection.

10. Coupling module (400) for switching device control, the coupling module (400) having a communication unit (410) and a control unit (450), which is connected to the communication unit (410), **characterized in that** a sensor element (420) for detecting the switching state of a switching device (200) associated with the coupling module is associated with the control unit (450), **in that** the communication unit (410) has a first communication interface for communicating with at least one function module (300) and a second communication interface for communicating with at least one further coupling module (400), **in that** the control unit (450) is designed to transmit the detected switching state of the switching device (200) to the function module (300) or to the at least one further coupling module (400) via the communication unit (410), **in that** an electrical circuit (440) is associated with the control unit (450), **in that** a switching command (SK) received via the communication unit (410) can be used to actuate the electrical circuit (440) in order to bring about a change in the switching state of the switching device (200), and **in that** the coupling module has two control current interfaces.

11. Coupling module (400) according to Claim 10, **characterized in that** the coupling module (400) is fastened detachably on the associated switching device (200), in particular can be snapped and/or latched onto said switching device, or is integrated in the associated switching device (200), so as to produce an electrical and/or mechanical connection.

12. Function module (300) according to one of the preceding Claims 1 to 9 or coupling module (400) according to Claim 10 or 11, **characterized in that** said module has a device for making contact with the main current paths (L1, L2, L3; T1, T2, T3) of the associated switching device (100, 200), the device for making contact with the main current paths (L1, L2, L3; T1, T2, T3) being coupled to the control unit (350, 450) of the function module (300) and the coupling module (400), respectively, with the result that the state of the associated switching device (100, 200) can be detected via a sensor element (320, 420) associated with the control unit (350, 450), and the detected state of the associated switching device (100, 200) can be used to control a further switching device.

13. System for switching device control, **characterized in that** the system has at least one function module (300) according to one of Claims 1 to 9 and at least one coupling module (400) according to one of Claims 10 to 12, said modules being connected to one another via communication units (310, 410) with associated communication interfaces and via control current interfaces for retransmission of a control current.

14. System for switching device control according to Claim 13, **characterized in that** the at least one function module (300) and the at least one coupling module (400) are connected to one another by means of a connecting cable (510), in particular a flat ribbon cable, and/or a jumper plug.

## Revendications

1. Module ( 300 ) fonctionnel pour une commande d'appareils de commutation, dans lequel le module ( 300 ) fonctionnel comprend
- une unité ( 310 ) de communication ayant une interface de communication pour la communication avec au moins un autre module fonctionnel et/ou avec au moins un module ( 400 ) de couplage,
- une unité ( 350 ) de commande, qui est reliée à l'unité ( 310 ) de communication et qui est constituée pour recevoir des signaux ( AE ) transmis à l'unité ( 310 ) de communication par le au moins un autre module fonctionnel et/ou le au moins un module ( 400 ) de couplage et pour transmettre des instructions ( SK ) de commutation par l'intermédiaire de l'unité ( 310 ) de communication au au moins un autre module fonctionnel et/ou au au moins un module ( 400 ) de couplage, **caractérisé par**
- une première interface de commande de courant pour la liaison électrique avec un premier appareil ( 100 ) de commutation ou avec une unité extérieure d'alimentation en courant, et
- une deuxième interface de courant de commande pour l'alimentation en courant de commande du au moins un autre module fonctionnel et/ou du au moins un module ( 400 ) de couplage.

2. Module ( 300 ) fonctionnel suivant la revendication 1, **caractérisé en ce que** la deuxième interface de courant de commande est intégrée dans l'interface de communication de l'unité ( 310 ) de communication ou l'interface de communication de l'unité ( 310 ) de communication est intégrée dans la deuxième interface de courant de commande.

3. Module ( 300 ) fonctionnel suivant la revendication 1 ou 2, **caractérisé en ce que** module ( 300 ) fonctionnel est relié électriquement et mécaniquement au premier appareil ( 100 ) de commutation pour détecter, par un élément ( 320 ) capteur associé à l'unité ( 350 ) de commande, l'état de commutation du premier appareil ( 100 ) de commutation et pour transmettre des instructions ( SK ) de commutation au premier appareil ( 100 ) de commutation.

4. Module ( 300 ) fonctionnel suivant la revendication 3, **caractérisé en ce que** l'unité ( 350 ) de commande est constituée pour, au moyen de grandeurs de mesure détectées par l'élément ( 320 ) capteur, déterminer au moyen des signaux ( AE ) reçus l'état de commutation du premier appareil ( 100 ) de commutation et/ou l'état de commutation du au moins un deuxième appareil ( 200 ) de commutation, qui est relié électriquement au au moins un autre module fonctionnel et/ou au au moins un module ( 400 ) de couplage, le au moins un autre module fonctionnel et/ou au moins un module ( 400 ) de couplage comportant un élément ( 420 ) capteur pour la détection de l'état de commutation du au moins un deuxième appareil ( 200 ) de commutation.

5. Module ( 300 ) fonctionnel suivant l'une des revendications précédentes 1 à 4, **caractérisé en ce que** l'unité ( 350 ) de commande du module ( 300 ) fonctionnel est constituée pour actionner un premier circuit ( 340 ) électrique par une instruction ( SK ) de commutation pour provoquer une modification de l'état de commutation du premier appareil ( 100 ) de commutation et pour actionner au moins un deuxième circuit ( 240 ) électrique par au moins une instruction ( SK ) de commutation pour provoquer une modification de l'état de fonctionnement du au moins un deuxième appareil ( 200 ) de commutation.

6. Module ( 300 ) fonctionnel suivant la revendication 5, **caractérisé en ce que** le module ( 300 ) fonctionnel ou l'unité ( 350 ) de commande du module ( 300 ) fonctionnel comporte un temporisateur ( 360 ) pour transmettre une instruction ( SK ) de commande au premier circuit ( 340 ) électrique et ainsi au premier appareil ( 100 ) de commutation et/ou pour transmettre une instruction ( SK ) de commutation au au moins un deuxième circuit ( 440 ) électrique et ainsi au au moins un deuxième appareil ( 200 ) de commutation, en fonction des états de commutation détectés et/ou d'au moins un signal de commande d'entrée du premier appareil ( 100 ) de commande au au moins un autre module fonctionnel et/ou au au moins un module ( 400 ) de couplage.

7. Module ( 300 ) fonctionnel suivant la revendication 6, **caractérisé en ce que** le temporisateur ( 360 ) est relié à un plan de commutation programmé à l'avance ou pouvant l'être dans un module ( 370 ) de mémoire du module ( 300 ) fonctionnel ou de l'unité ( 350 ) de commande du module ( 300 ) fonctionnel pour mettre à disposition du dispositif ( 350 ) de commande des états de commutation, prescrits au moyen du plan de commutation, des divers appareils ( 100, 200 ) de commutation.

8. Module ( 300 ) fonctionnel suivant l'une des revendications précédentes 5 à 7, **caractérisé en ce que** le module ( 300 ) fonctionnel est constitué de manière à commander l'état de commutation du premier appareil ( 100 ) de commutation associé au module ( 300 ) fonctionnel et/ou de l'appareil ( 200 ) de commutation associé au au moins un autre module fonctionnel et/ou au au moins un module ( 400 ) de couplage par ses bornes ( A1', A2' ) respectives de bobine.

9. Module ( 300 ) fonctionnel suivant l'une des revendications précédentes 1 à 8, **caractérisé en ce que** le module ( 300, 400 ) fonctionnel est, pour ménager la liaison électrique et/ou mécanique, fixé de manière amovible à l'appareil ( 100, 200 ) de commutation associé, en pouvant notamment être maintenu par ressort et/ou encliqueté sur celui-ci ou est intégré dans l'appareil ( 100, 200 ) de commutation associé.

10. Module ( 400 ) de couplage pour une commande d'appareil de commutation, le module ( 400 ) de couplage comprenant une unité ( 410 ) de communication et une unité ( 450 ) de commande reliée à l'unité ( 410 ) de communication, **caractérisé en ce qu'**un élément ( 420 ) capteur, de détection de l'état de commutation d'un appareil ( 200 ) de commutation associé au module de couple, est associé à l'unité ( 450 ) de commande, **en ce que** l'unité ( 410 ) de communication comporte une première interface de communication pour la communication avec au moins un module ( 300 ) fonctionnel et une deuxième interface de communication pour la communication avec au moins un autre module ( 400 ) de couplage, **en ce que** l'unité ( 450 ) de commande est constituée pour, par l'intermédiaire de l'unité ( 410 ) de communication, transmettre l'état de commutation détecté de l'appareil ( 200 ) de commutation au module ( 300 ) fonctionnel ou au au moins un autre module ( 400 ) de couplage, **en ce qu'**un circuit ( 440 ) électrique est associé à l'unité ( 450 ) de commande, **en ce qu'**au moyen d'une instruction ( SK ) de commutation reçue par l'unité ( 410 ) de communication, le circuit ( 440 ) électrique peut être actionné pour provoquer une modification de l'état de commutation de l'appareil ( 200 ) de commutation et **en ce que** le module de couplage comporte deux interfaces de courant de commande.

11. Module ( 400 ) de couplage suivant la revendication 10, **caractérisé en ce que** le module ( 400 ) de couplage est, pour ménager une liaison électrique et/ou mécanique, fixé de manière amovible à l'appareil ( 200 ) de commutation associé, en pouvant être notamment maintenu par ressort et/ou encliqueté sur celui-ci ou est intégré dans l'appareil ( 200 ) de commutation associé.

12. Module ( 300 ) fonctionnel suivant l'une des revendications précédentes 1 à 9 ou module ( 400 ) de couplage suivant la revendication 10 ou 11, **caractérisé en ce que** celui-ci comporte un dispositif de mise en contact des voies ( L1, L2. L3 ; T1, T2, T3 ) principales de courant de l'appareil ( 100, 200 ) de commutation associé, le dispositif de mise en contact des voies ( L1, L2. L3 ; T1, T2, T3 ) principales de courant étant couplé à l'unité ( 350, 450 ) de commande du module ( 300 ) fonctionnel ou du module ( 400 ) de couplage de manière à pouvoir détecter, par l'intermédiaire d'un élément ( 320, 420 ) associé à l'unité ( 350, 450 ) de commande, l'état de l'appareil ( 100, 200 ) de commutation associé et à pouvoir tirer parti de la détection de l'état de l'appareil ( 100, 200 ) de commutation associé pour commander un autre appareil de commutation.

13. Système de commande d'appareil de commutation **caractérisé en ce que** le système comporte au moins un module ( 300 ) fonctionnel suivant l'une des revendications 1 à 9 et au moins un module ( 400 ) de couplage suivant l'une des revendications 10 à 12, qui sont reliés entre eux par des unités ( 310, 410 ) de communication ayant des interfaces de communication associées et par des interfaces de courant de commande pour l'acheminement d'un courant de commande.

14. Système de commande d'appareil de commutation suivant la revendication 13, **caractérisé en ce que** le au moins un module ( 300 ) fonctionnel ou le au moins un module ( 400 ) de couplage sont reliés entre eux au moyen d'un câble ( 510 ) de liaison, notamment d'un câble en ruban plat et/ou d'un connecteur à pont.
